(19) Europäisches Patentamt
European Patent Office
Office européen des brevets

(11) EP 0 803 432 A2

(12) **EUROPEAN PATENT APPLICATION**

(43) Date of publication:
29.10.1997 Bulletin 1997/44

(51) Int. Cl.⁶: **B63B 1/06**

(21) Application number: 97106202.1

(22) Date of filing: 15.04.1997

(84) Designated Contracting States:
DE ES IT

(30) Priority: 25.04.1996 JP 104983/96

(71) Applicant: NKK CORPORATION
Tokyo 100 (JP)

(72) Inventors:
• Matsumoto, Koichiro,
c/o NKK Corporation
Kawasaki-ku, Kawasaki 210 (JP)

• Naito, Shigeru
Senriyama, Suita 564 (JP)

(74) Representative: Füchsle, Klaus, Dipl.-Ing. et al
Hoffmann Eitle,
Patent- und Rechtsanwälte,
Arabellastrasse 4
81925 München (DE)

(54) **Configuration of a ship's bow**

(57) A full ship has a bow configuration which reduces resistance by waves not only for waves of short wavelengths but also for waves of long wavelengths. The bow (2) has a bow stem (2a) inclined forward such that the angle between the stem and the load water line is 10-50 ° and the section of the stem is of downward wedge-shaped at a divergence angle falling in the range of 30-120 °.

# FIG.1

EP 0 803 432 A2

## Description

This invention relates to a bow configuration of a ship, in particular, a full ship such as a tanker or a bulk carrier.

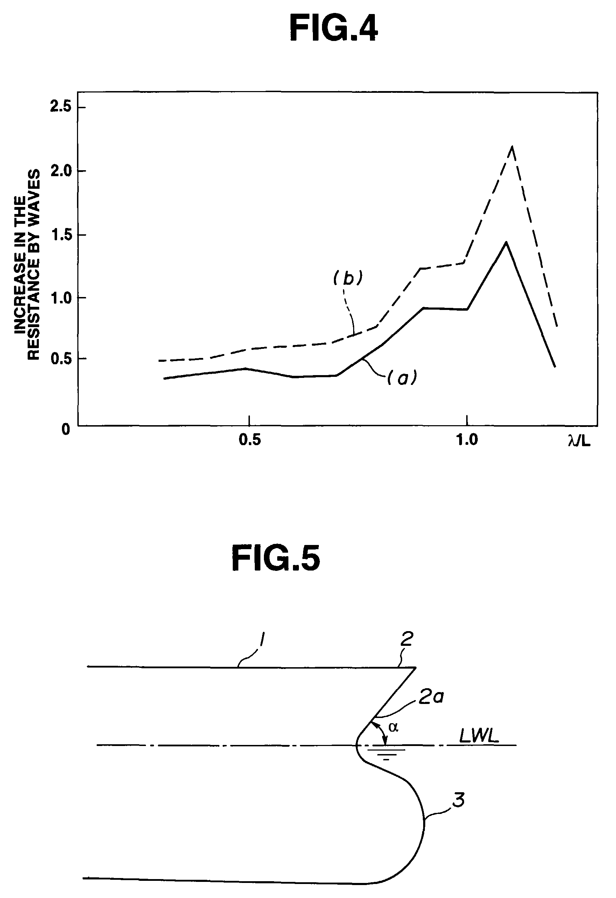

Fig. 5 is a longitudinal sectional view of an ordinary ship's bow taken along the center line of a ship. Referring to this Figure, the ship has a hull 1, a bow 2 with a bow stem 2a and a bulbous bow 3. LWL indicates the load water line, while $\alpha$ indicates the angle formed between the stem and the load water line. In other Figures of the drawing, the same reference numerals and symbols are used to denote the same parts as those used in Fig. 5.

The stem 2a of the bow 2 of an ordinary ship is inclined forward for the purpose of reducing resistance of waves during the navigation and for the purpose of improving the appearance, and the angle $\alpha$ between the stem 2a and the load water line LWL often exceeds 50 °.

It is also known that the bow below the load water line is projected forward as possible in order to reduce the resistance by waves against the hull during the navigation. Such a design, however, requires that the overall hull length is increased correspondingly. It is not allowed to significantly increase the hull length, due to restriction of the stowage capacity and so forth, in the case of a full ship such as a tanker or a bulk carrier in which the ratio of the breadth to the hull length is large.

Thus, many full ships have the bow below the load water line of the shape approximately perpendicular to the load water line. As a result, a problem has been encountered that the resistance of waves can not be sufficiently reduced during the navigation.

As for the reduction of the resistance of waves against a full ship, various proposals are made such as the bow configuration disclosed in the Japanese Unexamined Patent Publication No. 57-66087 as shown below.

Fig. 6 illustrates the longitudinal sectional view along the center line of the bow described in the Japanese Unexamined Patent Publication No. 57-66087. In the Figure, numeral 4 denotes the forward perpendicular.

Fig. 7 illustrates the cross-sectional view of the bow illustrated in Fig. 6.

The bow configuration described in 57-66087 is of the streamline shape from the bow to the stern as the stem 2a is farther upward from the load water line LWL, and of the shape which is outwardly convex at the portion near the forward perpendicular 4. According to this bow configuration, resistance of waves can be reduced because waves flow along the bow deck even when the ship encounters waves in heavy weather.

The bow configuration proposed in Japanese Unexamined Patent Publication No. 57-66087, although effective in reducing resistance created by waves of short wavelengths as those in rough or high sea, undesirably increases resistance created by waves of long wavelengths. At the same time, anchors, mooring ropes and other fittings can not be arranged on board like a general ship, and special equipment is required to accommodate and install such equipment.

It is an object of the present invention to provide a bow configuration of a full ship which is capable of reducing the resistance by waves not only for the waves of short wavelengths but also for waves of long wavelengths, and which dispenses with the special equipment for accommodating and installing anchors, mooring ropes and other fittings.

As stated before, in the case of a full ship, it is not allowed to project forward the bow below the load water line, due to reasons such as the restriction in the stowage capacity. The inventors have studied bow configuration above the load water line, and found that the resistance by waves can be reduced during the navigation if the stem of the bow is inclined forward such that the angle between the stem and the load water line is 10-50 ° , while the cross-sectional shape of the stem has a downward wedge shape with divergence angle falling in the range of 30-120° .

The invention and its emmbodiments are described more fully in the attached detailed description with reference to the drawings, in which:

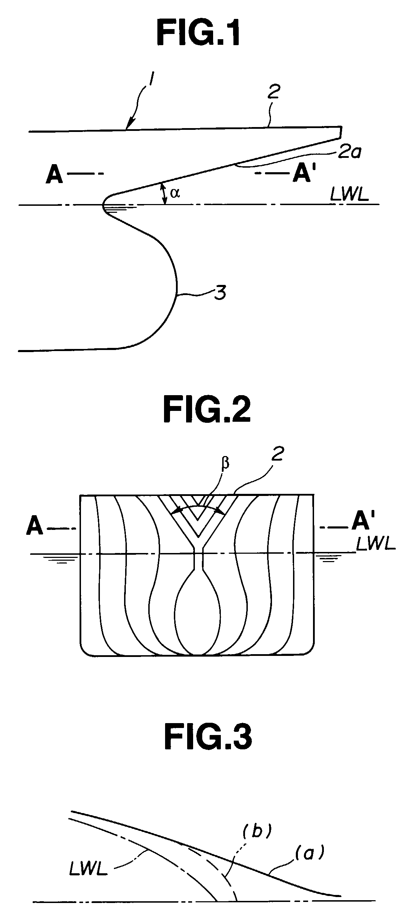

Fig. 1 is a longitudinal sectional view along the center line of the bow which is an embodiment of the present invention.

Fig. 2 is a transverse sectional view of the bow shown in Fig. 1.

Fig. 3 is a plan view of the water plane on the port side of the bow in Fig. 1.

Fig. 4 is a graph illustrative of the relationship between the increase in the resistance by waves and the ratio $\lambda/L$ between $\lambda$ (wavelength of the incident wave) and L(ship length).

Fig. 5 illustrates a longitudinal sectional view along the center line of the bow of an ordinary ship.

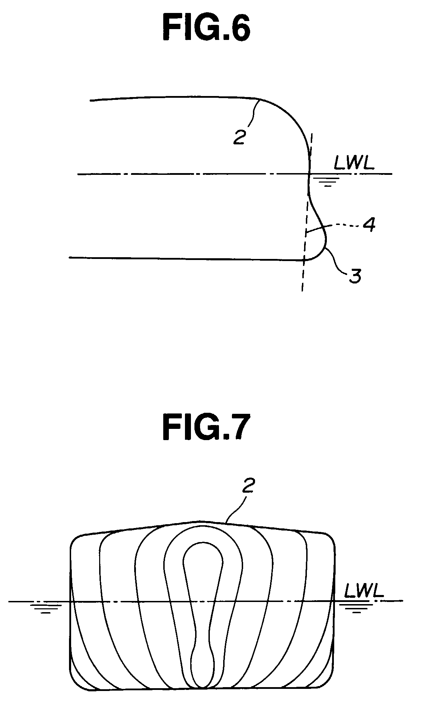

Fig. 6 illustrates a longitudinal sectional view along the center line of the bow disclosed in the Japanese Unexamined Patent Publication No. 57-66087.

Fig. 7 illustrates a cross-sectional view of the bow in Fig. 6.

In Figs. 1 and 2, A-A' indicates the water plane which the relative water surface reaches in waves. In Fig. 2, $\beta$ indicates the divergence angle of the wedge-shaped section of the stem.

In the bow 2 of the hull 1 which is an embodiment of the present invention, the stem 2a has a downward wedge-shaped cross-section and is inclined forward, while the lower part of the bow under the load water line LWL is configured as a bulbous bow.

When the angle $\alpha$ between the stem and the load water line is less than 10 ° , the stem 2a is brought close to floating objects, or strongly affected by waves, with the result that the bow 2 is likely to be damaged. When the angle $\alpha$ exceeds 50 ° , the resistance in waves is not sufficiently reduced. The angle α, therefore, should be in the range of 10-50° .

This may be attributed to the following reasons.

Referring to Fig. 3, a curvilinear line (a) shows the bow configuration of the present invention, while (b) indicates a conventional bow configuration. The position of the load water line LWL is also indicated for reference.

The relative wave surface of the hull 1 in waves rises and falls approximately around the load water line LWL. When the relative wave surface is above the load water line LWL, the hull resistance to waves is increased, and when the relative wave surface is below the load water line LWL, the hull resistance to waves is reduced. Thus, it is important to reduce the hull resistance when the relative wave surface is above the load water line LWL. The bow configuration in accordance with the present invention provides a shape of the water plane A-A' which is more acute in angle forward the bow than the conventional bow configuration as will be seen from Fig. 3, and the waves collided with the bow are collapsed forward of the bow and the reflected waves generated thereby become smaller, whereby the resistance by waves can further be reduced.

When the divergence angle β of the wedge-shaped section of the stem 2a is less than 30 ° , the width of the bow 2 is extremely small, and a large step is formed between the bow and the body of the hull to increase the resistance in waves. When the angle β exceeds 120° , the width of the bow 2 becomes too large, so that the effect to reduce the resistance by waves is deteriorated.

The inventors manufactured hull models with the bow configuration ( α=15 ° , β=90 ° ) in accordance with the present invention and with the conventional bow configuration (α=90 ° , β =90 ° ) to conduct a model tank test and studied the relationship between the increase in the resistance by waves and λ (wavelength of the incident wave). The increase in the resistance by waves is defined by the dimensionless value $R_{AW}/[\rho \cdot g \cdot \zeta_w^2 \cdot (B^2/L)]$, where $R_{AW}$ is the actual increasing amount of the resistance by waves, ρ is the density of seawater, g is the gravitational acceleration, $\zeta_w$ is the amplitude of incident wave and B is the ship breadth.

The relationship between the increase in the resistance by waves and the dimensionless ratio λ/L of the wavelength λ to the ship length L is shown in Fig. 4. In the Figure, a curve (a) shows the relationship as observed with the bow configuration in accordance with the present invention, while a curve (b) shows the relationship as obtained with the conventional bow configuration.

It will be seen that the increase in the resistance by waves can be reduced by 20-30% by employing the bow configuration in accordance with the present invention as compared with the conventional bow configuration.

**Claims**

1.  Bow configuration of a ship, characterized in that:

    (a) the bow stem is inclined forward such that the angle between the stem and the load water line is 10-50° ,
    and that
    (b) said bow stem has a downward wedge-shaped cross-section having divergent angle falling in the range of 30-120 ° .

# FIG.1

# FIG.2

# FIG.3

# FIG.4

# FIG.5

# FIG.6

LWL

2

4

3

# FIG.7

2

LWL